# EUROPEAN PATENT SPECIFICATION

(11) **EP 2 608 734 B1**
(45) Date of publication and mention of the grant of the patent: **01.05.2024**
(21) Application number: 10718373.3
(22) Date of filing: 30.04.2010
(51) Int. Cl.: A61C 5/40, A61C 17/20, A61C 17/02

(54) **ULTRASONIC TIP FOR DENTAL DEVICE**
ULTRASCHALLSPITZE FÜR EINE ZAHNVORRICHTUNG
POINTE ULTRASONORE POUR DISPOSITIF DENTAIRE

(30) Priority: 30.04.2009 US 174258 P
(43) Date of publication of application: 03.07.2013
(73) Proprietor: DENTSPLY SIRONA Inc., York, PA 17401-2991 (US)
(72) Inventor: MAXWELL, Randall, Broken Arrow, OK 74012 (US); GARROTT, Charles E., Tulsa, OK 74136 (US); MIZE, W. Shane, Kingsport, TN 37663 (US)
(74) Representative: Hartz, Nikolai
(86) International application number: PCT/US2010/033159
(87) International publication number: WO 2011/136798

(56) References cited:
- EP-A1- 2 179 704
- US-A1- 2004 038 175
- US-A1- 2008 044 789
- US-B2- 6 948 935

## Description

### FIELD OF THE INVENTION

The present invention is directed to a device for performing dental procedures, and specifically to an ultrasonic tip useful for delivering and agitating irrigants in root canal therapy, i.e., endodontics.

### BACKGROUND OF THE INVENTION

This invention relates to dental instruments and particularly to endodontic instruments, systems and procedures for treating a tooth root canal in which the root canal is cleansed of bacteriological materials by physical and acoustic debridgement and flushing with an irrigation solution, particularly the apparatus and equipment for providing irrigation to remove diseased and necrotic tissue.

Endodontic has become an important part of dentistry. Prior to the common use of endodontic procedures, an abscessed tooth was typically treated only by extraction of the tooth. However, since the advancement of endodontics, abscessed teeth can be successfully treated to permit retention by a patient, for greatly increased health and physiological benefit. Endodontics has been one of the great advances in modern medicine.

The endodontic preparation of a root canal typically includes opening the root canal through the coronal area of the tooth and thereafter manipulating files and reamers within the root canal to physically remove as much as possible of the pulpal material. This pulpal material is typically infected or necrotic, that is, dead material; and any such material that remains in the root canal after the procedure is completed is a source of potential infection. For this reason, proper treatment of a root canal attempts to remove as much of the necrotic pulpal material as is possible. By use of files and reamers, a substantial portion of such pulpal material can be removed; however, it is virtually impossible in most cases to remove all such material by physical manipulation of tools within the canal. For this reason, in recent times procedures have been developed wherein the root canal is irrigated or flushed with a fluid to remove and/or neutralize organic pulpal material that remains after files and reamers have been employed.

As background information, reference may be had to U.S. Patent No. 4,330,278 that issued May 18, 1982 to Howard Martin, entitled "Endodontic Flow-through Ultrasonic Instrument Holder Device." This device shows a system that includes a holder for holding an instrument used for dental work that includes a passageway by which flushing fluid can be injected into a tooth for endodontic procedures.

Another example of prior art, and one that teaches the use of ultrasonics in dental technology, is U.S. Patent No. 6,948,935 entitled "Ultrasonic Dental Device." This patent issued to John Nusstein on September 27, 2005.
A tip assembly for use with a dental tool which has an ultrasonic energy generator positioned therein according to the preamble of claim 1 is known from EP 2 179 704 A1.

It is the problem of the present invention to provide a tip assembly for use with a dental tool which has an ultrasonic energy generator positioned therein, wherein optimum cleaning of the root canal is provided without using an additional pump, and wherein corrosion is limited and inherent stress concentration locations are eliminated, thereby allowing the tip assembly to be reliable during vibration while the tip assembly provides proper agitation to the irrigants even in case the tip assembly is disposable, thereby requiring that a new tip assembly be used for each patient so that the tip assembly will be sterile prior to use.

### SUMMARY OF THE INVENTION

The present invention is directed to a tip assembly for use with a dental tool as defined by claim 1. The dental tool has an ultrasonic energy generator positioned therein. The tip assembly has an insert, a needle and a housing. The insert attaches to the dental tool and has a receiving portion. The needle has a passageway extending therethrough from a proximal end of the needle to a distal end of the needle. The passageway provides a single continuous flow path for delivering fluid from a reservoir at the proximal end of the needle to a root canal of a tooth at the distal end of the needle. The housing is molded over at least a portion of the needle and cooperates with the needle to maintain the needle in position relative to the receiving portion of the insert.
The receiving section and the needle are coplanar. Energy generated by the ultrasonic energy generator is translated into movement of the needle, including the distal end of the needle which is planar to the longitudinal axis of the needle to provide optimum cleaning to the root canal.

The invention described herein has many advantages. The needle has a single continuous flow path which eliminates potential leak paths. As no joints or discontinuities are present, corrosion is limited. Inherent stress concentration locations are also eliminated, thereby allowing the tip assembly to be reliable during vibration. The configuration of the tip assembly guides and transfers the ultrasonic vibration and energy in the plane of motion, which provides proper agitation to the irrigants. The tip assembly is also disposable, thereby requiring that a new tip assembly be used for each patient and insuring that the tip assembly will be sterile prior to use.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a perspective view of a portion of a dental tool with a tip assembly attached to an ultrasonic wand thereof.
FIG. 2 is an enlarged perspective view of the tip assembly attached to the ultrasonic wand.
FIG. 3 is a diagrammatic view the tip assembly with the housing removed to illustrate a needle positioned in a slot of a threaded member.
FIG. 4 is a perspective view of the dental tool with the tubing extending from the tip assembly and cooperating with a guide attached to the ultrasonic wand.
FIG. 5 illustrates various views of the threaded insert of the tip assembly.
FIG. 6 illustrates various views of the needle of the tip assembly.
FIG. 7 illustrates various views of the assembled tip assembly.
FIG. 8 is a perspective view of the tip assembly attached to the ultrasonic wand and the tubing, the tubing having a connector attached to an end thereof.
FIG. 9 is a side view of the tip assembly shown in FIG. 8 with portions shown in cross-section.
FIG. 10 is an illustration of the movement of the needle as the ultrasonic wand is vibrated.
FIG. 11 illustrates the cleaning effectiveness of the tip assembly of the present invention compared to a needle of the prior art.

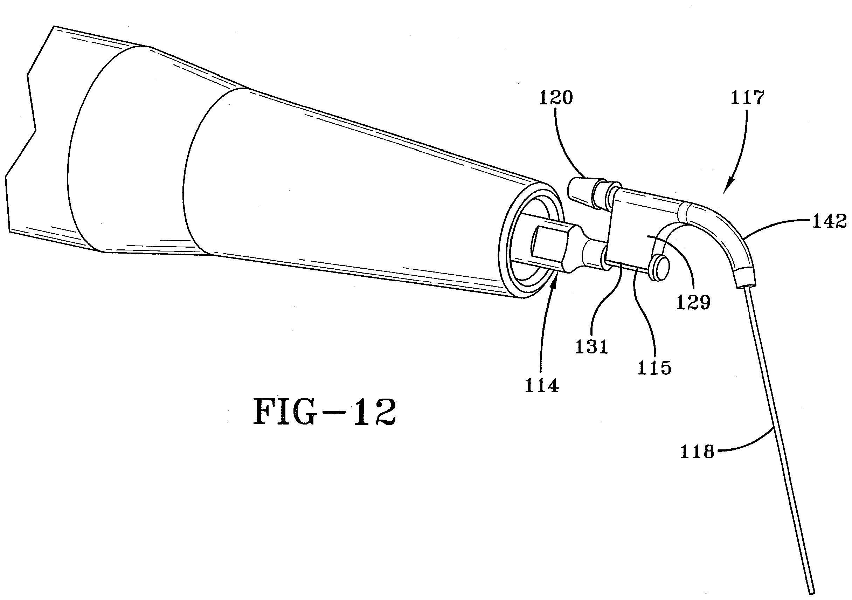

Fig. 12 is a side view of a fifth alternate embodiment of the tip assembly of the present invention.
Fig. 13 depicts an optional embodiment for a needle of the present invention.
Fig. 14 provides several additional embodiments for needles that may be used in conjunction with the tip assembly of the present invention.

### DETAILED DESCRIPTION OF THE INVENTION

The practice of endodontics includes preparation of root canals to receive filler material. Such filler material is typical gutta percha but other comparable materials have been developed. It is important that the root canals be shaped and cleaned as thoroughly as possible to remove all organic material. Such organic material is typically pulpal material that exists as a natural portion of a tooth and by which a tooth is nourished during the formation process. Such pulpal material, if left within a root canal and entrapped by filler material, can become infected and thereby cause problems to the patient. The infection that originates within a root canal can spread to other parts of the body. For this reason, it is important, as above stated, to remove as much pulpal and other necrotic material from the confines of the root canals as is possible.

The typical endodontic procedure requires the endodontist to scrape and shape the root canals in a way to remove as much as possible of pulpal material and to shape the root canal to receive filler material. However, root canals typically have laterally extending fissures and other irregularities in which pulpal material can become entrapped, thereby making it very difficult to remove all pulpal material by physically scraping and shaping alone. For this reason, a procedure has arisen wherein after the physical scraping and shaping occurs, a root canal is irrigated or flushed with an irrigant or solution to remove and/or neutralize the organic pulpal material that would otherwise remain.

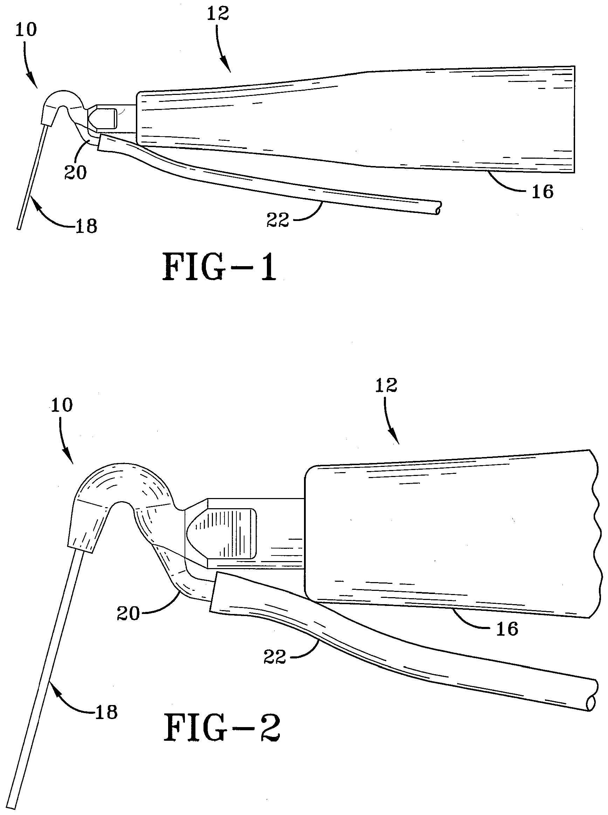

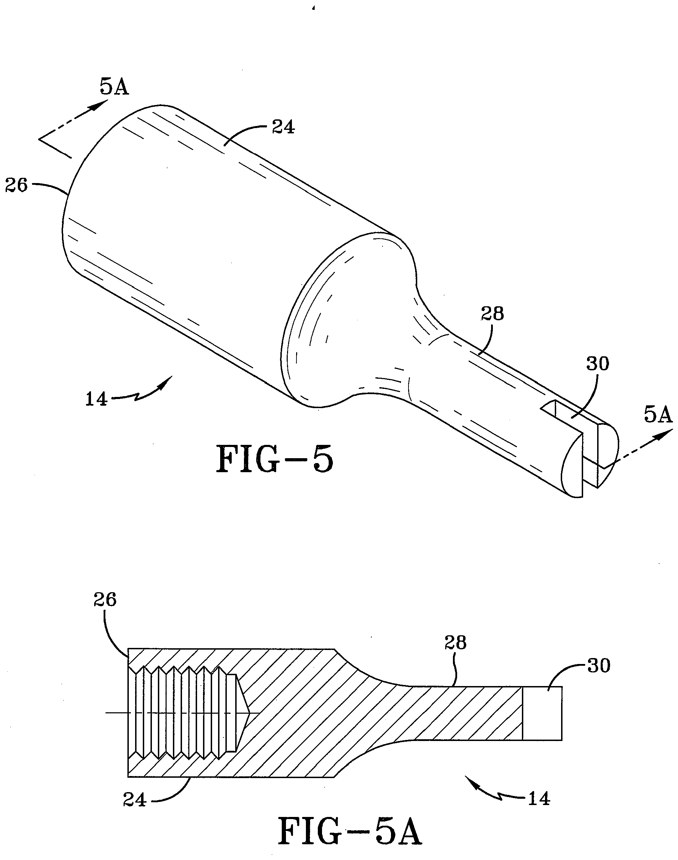

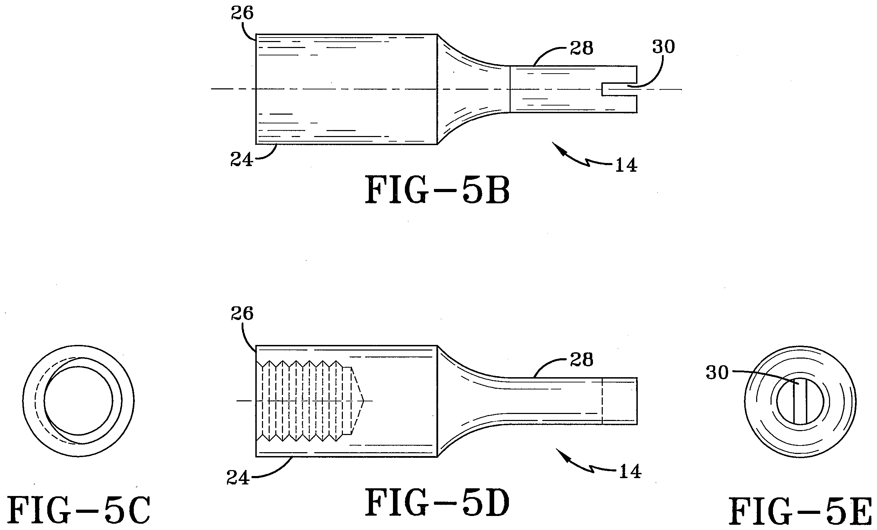

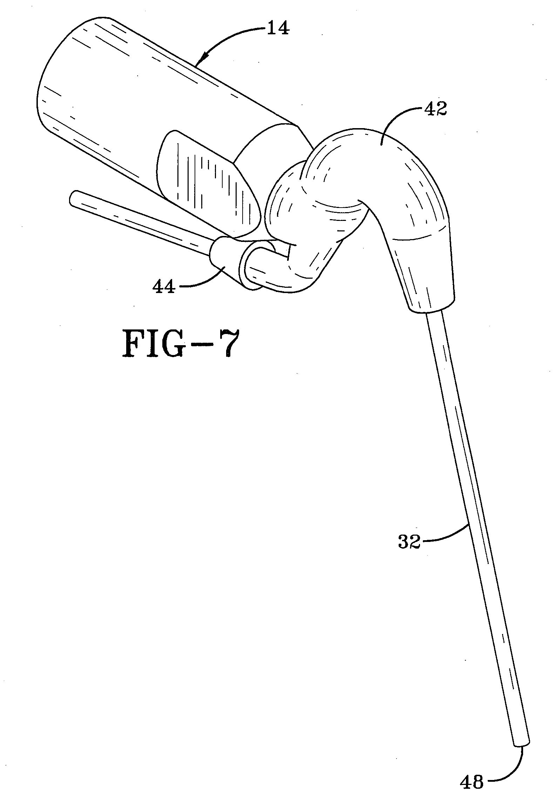

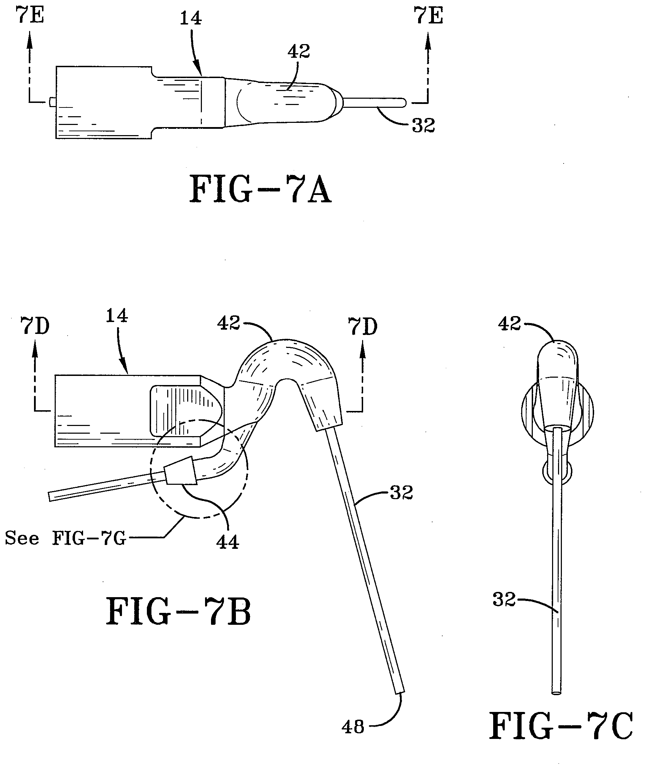

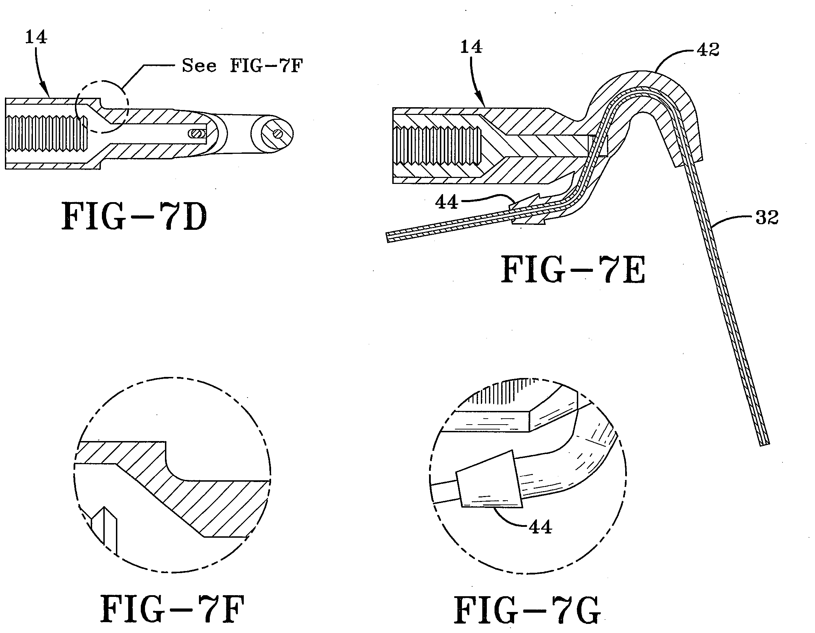

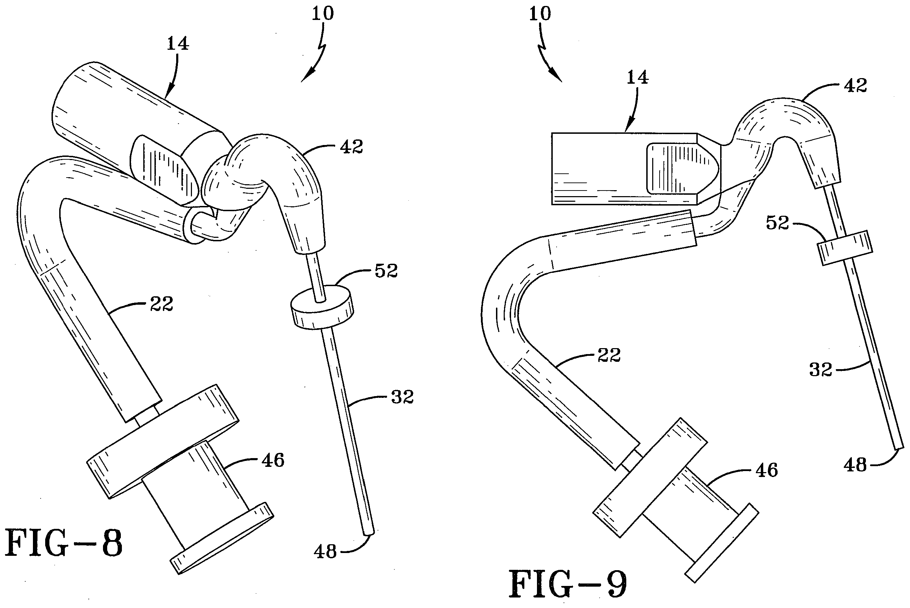

With reference to FIGS. 1 through 9, and according to an exemplary embodiment of the present invention, a consumable tip assembly 10 for use with a dental device 12 includes a threaded insert 14 for cooperating with a wand 16, a hypodermic needle 18 which engages the threaded insert 14 and a tube-receiving projection 20 from which tubing 22 extends. The dental device 12 has a wand 16, which is a graspable and manipulatable hand piece. The wand 16 has a proximal end 17 in communication with the tip assembly 10. In a preferred embodiment, the wand includes an ultrasonic energy generator or transducer (not shown) positioned in the wand 16 proximate the proximal end 17.

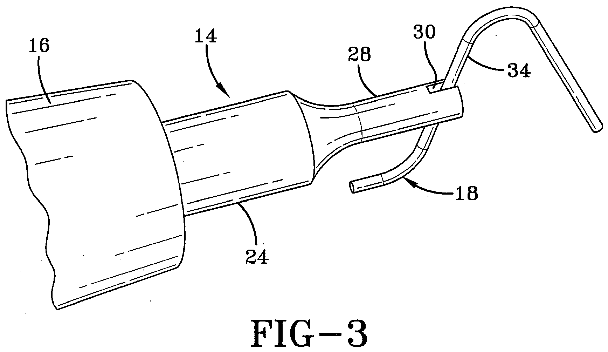

As best illustrated in FIGS. 3, 5, 6, 7, 8 and 9, threaded insert 14 includes a threaded housing 24 with a first planar surface 26 which is threadably attached to the ultrasonic wand 16 when the dental device 12 is in operation. A needle positioning member 28 extends from the threaded housing 24 in a direction away from the first planar surface 26. A needle receiving portion or slot 30 is positioned at the end of the needle positioning member 28. The threaded housing 24 and the first planar surface 26 are compatible with many commercially available tools. The threaded insert 14 may be made from brass, aluminum, low carbon steel, or other metals and/or alloys which have the strength and stability characteristics to mount the ultrasonic wand 16 and withstand the vibration applied thereto.

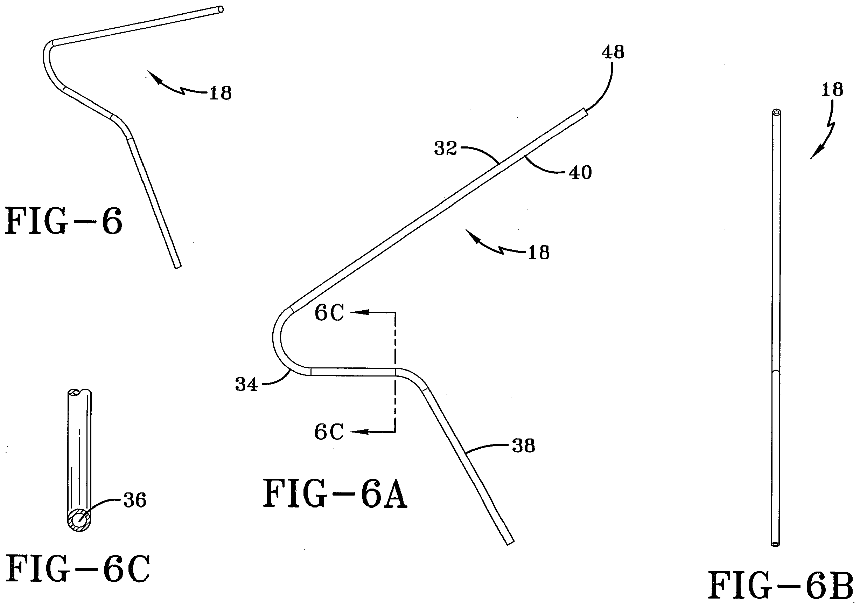

Referring to FIGS. 3 and 6, the hypodermic needle 18 preferably is made from stainless steel and is formed to have a generally straight portion 32 and a generally S-shaped or arcuate portion 34 which is integral with the straight portion 32. The needle 18 has a passageway 36 which extends through the entire length of the needle 18 from its proximal end 38 to its distal end 40. The pathway provides a single continuous, uninterrupted flow path for irrigants, as will be more fullv described. A portion of the needle 18 is positioned and maintained in the needle receiving slot 30 of the needle positioning member 28 of the threaded insert 14.

In the embodiment shown, the needle is made from 25 gage stainless steel, although other gage needles and materials can be used as well. The end of the needle between the tip 48 and the stopper 52 preferably is approximately 3.81 cm (1½ inches) in length. The tip 48 is blunt, but may include a bevel of about 15°. Preferably, needle 18 is substantially rigid, i.e., non-flexible. Other needle configurations can be used without departing from the scope of the invention. Tubing 22 may have an inside dimension of 3.18 mm (1/16 inch) and may be manufactured from plastic or a similar material, as a syringe, although other materials are compatible with these components of the present invention.

The stopper 52 is a known endodontic stopper which is placed on the needle 18 for judging the depth of penetration of the tip 48 of the needle 18 into the root canal. The stopper 52 is set to prevent the tip 48 from penetrating the apex of the root canal. The stopper 52 may be made from plastic or other materials.

A housing 42 is over molded over the threaded insert 14 and a portion of the needle 18, as best shown in FIG. 1, 2 and 7 through 9. The tube receiving projection 20 is formed in the housing 42 proximate the proximal end 38 of the needle 18. The tube receiving projection 20 has a circumferentially extending barb 44 which cooperates with the tubing 22 to maintain the tubing in position on the tube receiving projection 20. In the embodiment shown, the housing 42 is injection molded using polycarbonate material. However, other plastics or materials which have strength and hardness characteristics to maintain the needle 18 in position relative to the threaded insert 14 as the tip assembly 10 is vibrated can be used.

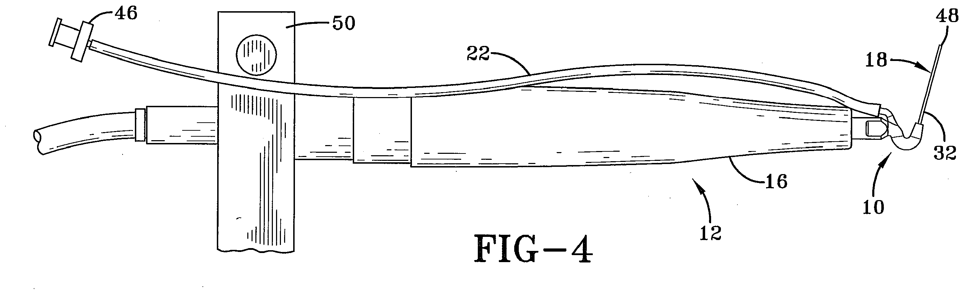

Tubing 22 is used to deliver fluid from a reservoir to the needle 18 to a site within a dental patient's mouth where flushing is to occur. A connector 46, positioned at the end of the tubing 22 which is removed from the barb 44, is attached to a fluid reservoir such as a syringe. As shown in FIGS. 4, 8 and 9, a syringe having a Luer-Lok type connector may be used as the reservoir for fluids because the operator of dental device 12 can easily control the volume of fluid delivered into and through tubing assembly 32. Other types of reservoirs include any type of container which can store the irrigant. Some reservoirs may require the use of a pump to move the irrigants from the reservoir to the tubing 22, while others do not require a pump. The tubing may also have various configurations, including but not limited to a spout from a bladder or the like or an fluid line which is positioned internally to the ultrasonic wand 16. Depending on the configuration of the tubing, the tubing may be made from plastic, rubber, metal or other know materials for tubing.

Prior to use, the tip assembly 10 must be properly assembled onto the ultrasonic device 16. An exemplary method for assembling tip assembly 10 includes the following steps. First, threaded insert 14 is threaded onto ultrasonic wand 16. As will be appreciated by those skilled in the art, ultrasonic wand 16 is typically attached to a separate power supply and may be any of a variety of ultrasonic devices that are commercially available. One end of tubing 22 is attached to the tube receiving projection 20 and the other end of the tubing assembly is attached to a syringe or other reservoir. A portion of the tubing may be secured to ultrasonic wand 16 by guide 50 as shown in FIG. 4. The guide 50 may act as a strain relief for the tubing 22 and helps to keep the tubing 22 close to the ultrasonic wand 16, thereby preventing entanglements and kinks in the tubing 22.

Once the tip assembly 10 has been assembled to the ultrasonic wand 16 and tubing 22, a portion of needle 18 is placed within the root canal in tooth to an appropriate length in which the tip 48 of the needle 18 does not penetrate the apex of the root canal. The ultrasonic wand 16 is activated by the user at a power level ranging from low to the maximum power. Ultrasonic energy passes from the ultrasonic wand 16 through the threaded insert 14 and to the needle 18. The curved, double-ended configuration of the needle 18 acts similarly to a tuning fork. The vibrations induced on the center of the needle 18 by the threaded insert 14 are amplified due to the free vibration at tip 48. The fluid is then pumped or forced through the passageway 36 of the needle 18 to the root canal. The flow of fluid can begin prior to, simultaneously with or after the ultrasonic wand 16 has been activated.

The vibrations of the ultrasonic wand 12 are most effective when they are translated to the tip 48 in a single plane. The shape of the needle 18 and the needle-receiving slot 30 creates a geometry that generates movement of the needle 18 and its tip 48 in a direction which is planar to the longitudinal axis of the needle 18. This planar motion is maintained over cycles, as the over-molded housing 42 maintains the needle 18 within the needle-receiving slot 30 of the threaded insert 14, thereby allowing the motion of the ultrasonic wand 16 to be properly transferred to the needle 18 without distortion.

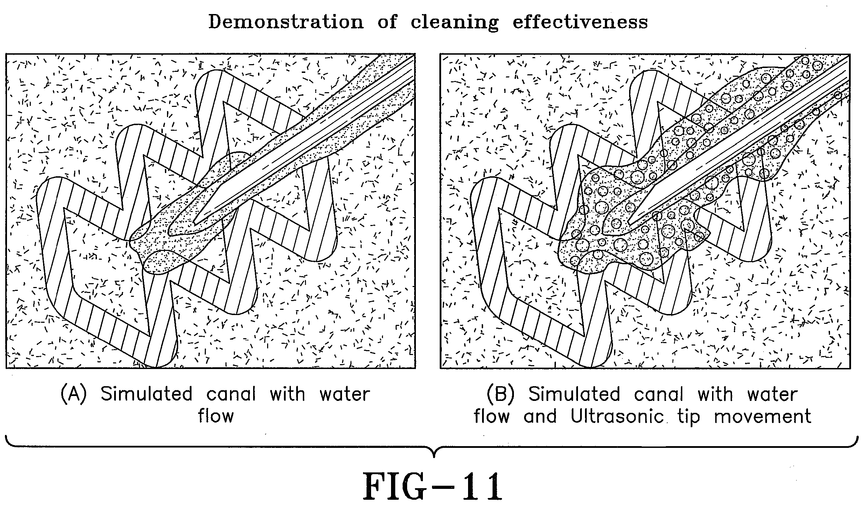

As is illustrated in FIG. 11, as ultrasonic energy is directed through the needle 18 and into the root canal, the needle 18 activates the solution, i.e., a fluctuating pressure-vacuum field known as transient and stable cavitation is generated. The use of the ultrasonic energy allows the irrigant to be delivered to the root canal at a relatively low stream velocity. As will be appreciated by those skilled in the art, this energy field destroys microorganisms present within the root canal and loosens tissue and other debris from the affected area, thereby allowing for a more complete endodontic treatment.

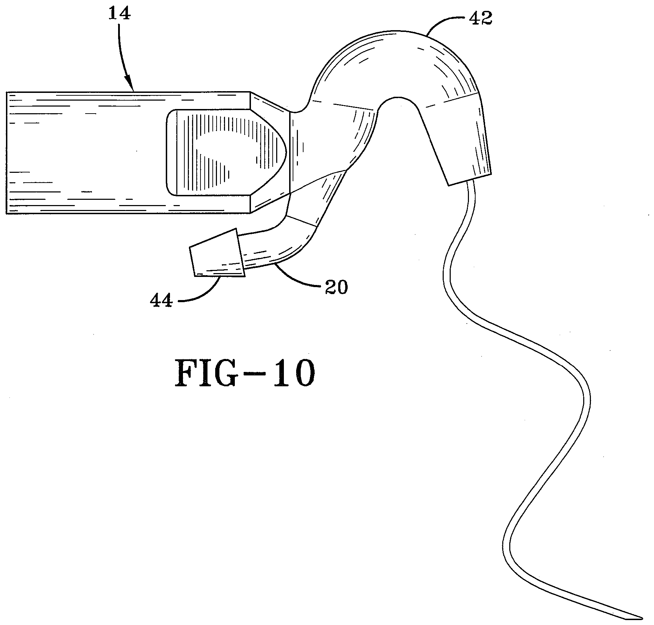

In the embodiment described, the needle 18 oscillates at approximately 27 kHz, which allows the needle 18 to vibrate at resonant frequency (as illustrated in FIG. 10), thereby providing optimum energy to the irrigant to provide optimum cleaning. The resonant frequency of various needles can vary, but can be calculated, using the length of the needle, the stiffness of the materials and the assembly, and the geometry of the tip assembly. Generally the frequency is above 20 kHz.

As the needle is operating in ultrasonic mode, an irrigant or irrigating solution, stored in the syringe or other reservoir, is dispensed into the root canal by depressing the plunger on the syringe or by actuating a pump if another type of reservoir is being used. This solution washes out the affected area within the root canal and effectively removes loosened tissue, microorganisms, and other debris. By way of example, a typical solution is a diluted sodium hypochlorite, but other solutions such as sterile saline, citric acid, calcium hydroxide, antibiotic solutions, antiseptic solutions, demineralizing solutions or a combination of these solutions may be used as irrigating solutions with the present invention. Additionally, the present invention is useful for placing the following materials in the root canal space: endodontic medications and medicaments such as calcium hydroxide, camphorated paramonochlorphenol, formocresol, and camphorated phenol; endodontic sealers such as zinc oxide, calcium hydroxide and resin; and endodontic obturation materials such as gutta percha, and zinc oxide.

Figure 22 depicts an alternate embodiment of the tip assemblv 110. In this embodiment, as shown in Fig. 22(a)the threaded insert 114 includes a needle receiving slot 30. A portion of the needle 118 is positioned in needle receiving slot 30. The needle is then permanently affixed within needle receiving slot by welding, soldering or brazing. Permanent affixation may be accomplished by bonding the needle 118 in needle receiving slot 30 with an adhesive. Affixation may also be accomplished by crimping the needle 118 within needle receiving slot 30 as long as the crimping operation does not adversely affect the passageway within needle 118. After the needle 118 has been affixed within slot 30. a material mav be overmolded around the insert 114, the needle 118, and the needle receiving slot 30 as shown in Fig. 22(b). Over molding that encompasses the S-bend portion of needle and includes a small segment of the straight section of needle 118 may also be accomplished as depicted in Fig. 22(c).

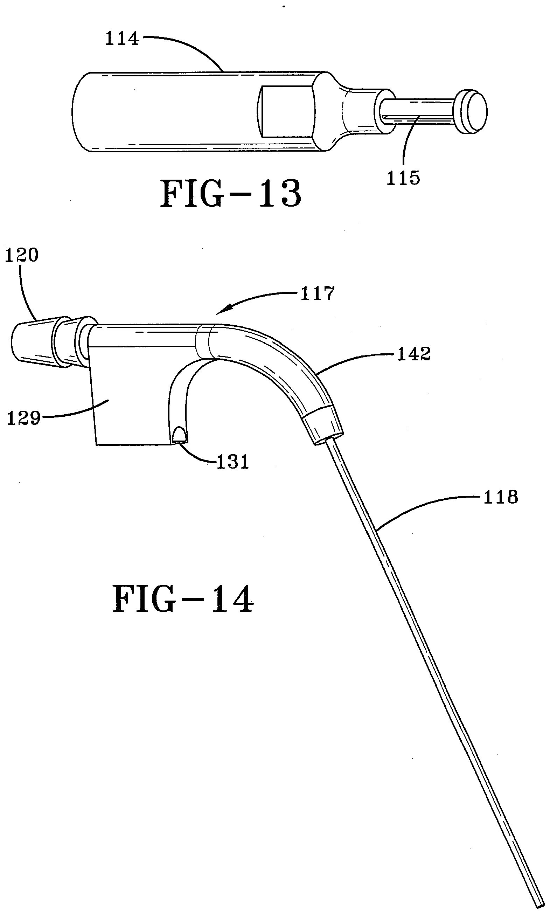

Fig. 13 depicts an optional embodiment for a needle of the present invention. In a preferred embodiment, this needle 1118 includes a central axis extending in a longitudinal direction along the needle. The needle has a central aperture extending in the longitudinal direction. Stated differently, needle 1118 is hollow. However needle 111. plurality of apertures extending through the circumference at an angle to the central axis. As depicted in Fig. 13, the plurality of apertures extend through the circumference at a right angle to the central axis. However, the apertures' direction is not so limited as they may extend through the circumference of the needle at any convenient angle to the central axis. Furthermore, the needle 1118 may include an aperture along the central axis at its most distal end. The plurality of apertures provide the needle with the ability to deliver fluid to the work area, typically the root canal region, omni directionally.

Fig. 14 provides several additional embodiments for needles that may be used in conjunction with the tip assembly of the present invention. Fig. 31(a) depicts a traditional straight, solid needle. Fig. 31(b) depicts a straight, hollow needle having an open end at the tip or distal end of the needle. Fig. 31(c) depicts a hollow needle with the tip end closed, but having a circumferential side-vented opening to direct fluid into the cavity in an axial direction. Fig. 31(d) depicts a hollow needle with the tip end closed but having a plurality of openings along the circumference to direct fluid axially substantially 360° around the circumference of the needle. Apertures for needles depicted in Figs. (c) and (d) can be fabricated using laser cutting techniques. Fig. (e) depicts a shaped or comport needle that can be used to magnify the hydrodynamic effects of the fluids flowing through it. Any of these needle designs can be used with or as part of the tip assembly of the present invention.

The invention described herein has many advantages. The needle has a single continuous flow path which eliminates potential leak paths. As no joints or discontinuities are present, corrosion is limited. Inherent stress concentration locations are also eliminated, thereby allowing the tip assembly to be reliable during vibration. The configuration of the tip assembly guides and transfers the ultrasonic vibration and energy in the plane of motion, which provides proper agitation to the irrigants. The tip assembly is also disposable, thereby requiring that a new tip assembly be used for each patient and insuring that the tip assembly will be sterile prior to use.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A tip assembly (10) for use with a dental tool which has an ultrasonic energy generator positioned therein, the tip assembly (10) comprising:
(i) an insert (14) for attaching to the dental tool, the insert (14) having a receiving portion (30); a threaded housing (24) having a first planar surface (26) which can be threadably attached to the dental tool, a needle positioning member (28) extending from the threaded housing (24) in a direction away from the first planar surface,
(ii) a needle (18) having a passageway (36) extending therethrough from a proximal end (38) of the needle (18) to a distal end (40) of the needle (18), the passageway (36) providing a single continuous flow path for delivering fluid from a reservoir at the proximal end (38) of the needle (18) to a root canal of a tooth at the distal end (40) of the needle;
(iii) a housing (42) molded over the insert (14) and at least a portion of the needle, the housing (42) cooperating with the insert (14) and the needle (18) to maintain the needle (18) in position relative to the receiving portion (30) of the insert (14);
(iv) the receiving portion (30) and the needle (18) are planar;
whereby the energy generated by the ultrasonic energy generator is translated into movement of the needle (18) and the distal end (40) of the needle (18) which are planar to a longitudinal axis of the needle (18) to provide optimum cleaning to the root canal, **characterized in that**
- the receiving portion (30) positioned at the end of the needle positioning member having a needle receiving slot, whereby the proximal end (38) of the needle (18) engages a needle positioning portion of the needle positioning member (28), the needle (18) being positioned and maintained in the receiving slot by the housing (42); and **in that**
- the needle (18) has a straight portion (32) and a S-shaped portion (34), the S-shaped portion (34) cooperates with the receiving portion (30) of the insert (14), and wherein vibrations induced on the needle (18) by the ultrasonic energy through the threaded insert (14) are amplified due to the free vibration at the tip (48) of the needle (18) whereby a fluid is pumped or forced through the passageway (36) of the needle (18) to the root canal.

2. The tip assembly (10) as recited in claim 1 wherein the needle (18) is substantially rigid and has a blunt tip provided at the distal end of the needle.

3. The tip assembly (10) as recited in claim 1 wherein the needle (18) has a stopper proximate the distal end of the needle, the stopper prevents a tip of the needle (18) from penetrating an apex of the root canal of the tooth.

4. The tip assembly (10) as recited in claim 1 wherein the housing (42) has a tube receiving projection proximate the proximal end of the needle, the tube receiving projection having a circumferentially extending barb which cooperates with tubing to maintain the tubing in position on the tube receiving projection.

5. The tip assembly (10) as recited in claim 1 wherein the distal end of the needle (18) vibrates at resonant frequency, providing optimum energy to the fluid which is delivered to the root canal of the tooth, thereby providing optimum cleaning.

## Patentansprüche

1. Spitzenanordnung (10) zur Verwendung mit einem Dentalwerkzeug, in der ein Ultraschallenergiegenerator angeordnet ist, die Spitzenanordnung (10) umfassend:
(i) einen Einsatz (14) zum Befestigen an dem Dentalwerkzeug, wobei der Einsatz (14) aufweist: einen Aufnahmeabschnitt (30); ein Gewindegehäuse (24) mit einer ersten planaren Oberfläche (26), die an dem Dentalwerkzeug verschraubbar befestigt werden kann, ein Nadelpositionierungselement (28), das sich von dem Gewindegehäuse (24) in einer Richtung weg von der ersten planaren Oberfläche erstreckt,
(ii) eine Nadel (18), die einen Durchgang (36) aufweist, der sich durch sie hindurch von einem proximalen Ende (38) der Nadel (18) zu einem distalen Ende (40) der Nadel (18) erstreckt, wobei der Durchgang (36) einen einzelnen kontinuierlichen Strömungsweg zum Abgeben von Flüssigkeit von einem Behälter an dem proximalen Ende (38) der Nadel (18) zu einem Wurzelkanal eines Zahns an dem distalen Ende (40) der Nadel bereitstellt;
(iii) ein Gehäuse (42), das über den Einsatz (14) und zumindest einen Abschnitt der Nadel geformt ist, wobei das Gehäuse (42) mit dem Einsatz (14) und der Nadel (18) zusammenwirkt, um die Nadel (18) relativ zu dem Aufnahmeabschnitt (30) des Einsatzes (14) in Position zu halten;
(iv) der Aufnahmeabschnitt (30) und die Nadel (18) planar sind;
wobei die durch den Ultraschallenergiegenerator erzeugte Energie in eine Bewegung der Nadel (18) und des distalen Endes (40) der Nadel (18) umgesetzt wird, die planar zu einer Längsachse der Nadel (18) sind, um eine optimale Reinigung des Wurzelkanals bereitzustellen, **dadurch gekennzeichnet, dass**
- der Aufnahmeabschnitt (30), der an dem Ende des Nadelpositionierungselements positioniert ist, einen Nadelaufnahmeschlitz aufweist, wobei das proximale Ende (38) der Nadel (18) mit einem Nadelpositionierungsabschnitt des Nadelpositionierungselements (28) in Eingriff steht, wobei die Nadel (18) durch das Gehäuse (42) in dem Aufnahmeschlitz positioniert und gehalten wird; und dadurch, dass
- die Nadel (18) einen geraden Abschnitt (32) und einen S-förmigen Abschnitt (34) aufweist, wobei der S-förmige Abschnitt (34) mit dem Aufnahmeabschnitt (30) des Einsatzes (14) zusammenwirkt, und wobei Vibrationen, die durch die Ultraschallenergie durch den Gewindeeinsatz (14) auf die Nadel (18) induziert werden, aufgrund der freien Vibration an der Spitze (48) der Nadel (18) verstärkt werden, wodurch eine Flüssigkeit durch den Durchgang (36) der Nadel (18) zu dem Wurzelkanal gepumpt oder gezwungen wird.

2. Spitzenanordnung (10) nach Anspruch 1, wobei die Nadel (18) im Wesentlichen starr ist und eine stumpfe Spitze aufweist, die an dem distalen Ende der Nadel bereitgestellt wird.

3. Spitzenanordnung (10) nach Anspruch 1, wobei die Nadel (18) einen Stopper in der Nähe des distalen Endes der Nadel aufweist, wobei der Stopper verhindert, dass eine Spitze der Nadel (18) in einen Apex des Wurzelkanals des Zahns eindringt.

4. Spitzenanordnung (10) nach Anspruch 1, wobei das Gehäuse (42) einen Röhrenaufnahmevorsprung in der Nähe des proximalen Endes der Nadel aufweist, wobei der Röhrenaufnahmevorsprung einen sich in Umfangsrichtung erstreckenden Widerhaken aufweist, der mit der Röhre zusammenwirkt, um die Röhre auf dem Röhrenaufnahmevorsprung in Position zu halten.

5. Spitzenanordnung (10) nach Anspruch 1, wobei das distale Ende der Nadel (18) mit Resonanzfrequenz schwingt, wodurch der Flüssigkeit, die dem Wurzelkanal des Zahns zugeführt wird, auf optimale Weise Energie bereitgestellt wird, wodurch eine optimale Reinigung bereitgestellt wird.

## Revendications

1. Ensemble de pointe (10) pour une utilisation avec un outil dentaire qui a un générateur d'énergie ultrasonore positionné dans celui-ci, l'ensemble de pointe (10) comprenant :
(i) un insert (14) destiné à être fixé à l'outil dentaire, l'insert (14) ayant une portion de réception (30) ; un logement fileté (24) ayant une première surface plane (26) qui peut être fixée par filetage à l'outil dentaire, un élément de positionnement d'aiguille (28) s'étendant à partir du logement fileté (24) dans une direction s'éloignant de la première surface plane,
(ii) une aiguille (18) ayant un passage (36) s'étendant à travers celle-ci depuis une extrémité proximale (38) de l'aiguille (18) jusqu'à une extrémité distale (40) de l'aiguille (18), le passage (36) fournissant un seul trajet d'écoulement continu pour délivrer un fluide depuis un réservoir au niveau de l'extrémité proximale (38) de l'aiguille (18) jusqu'à un canal radiculaire d'une dent au niveau de l'extrémité distale (40) de l'aiguille ;
(iii) un logement (42) moulé sur l'insert (14) et au moins une portion de l'aiguille, le logement (42) coopérant avec l'insert (14) et l'aiguille (18) pour maintenir l'aiguille (18) en position par rapport à la portion de réception (30) de l'insert (14) ;
(iv) la portion de réception (30) et l'aiguille (18) sont planes ;
dans lequel l'énergie générée par le générateur d'énergie ultrasonique est traduite en mouvement de l'aiguille (18) et de l'extrémité distale (40) de l'aiguille (18) qui sont planes par rapport à un axe longitudinal de l'aiguille (18) pour fournir un nettoyage optimal au canal radiculaire, **caractérisé en ce que**
- la portion de réception (30) positionnée au niveau de l'extrémité de l'élément de positionnement d'aiguille ayant une fente de réception d'aiguille, moyennant quoi l'extrémité proximale (38) de l'aiguille (18) vient en prise avec une portion de positionnement d'aiguille de l'élément de positionnement d'aiguille (28), l'aiguille (18) étant positionnée et maintenue dans la fente de réception par le logement (42) ; et en ce
- l'aiguille (18) a une portion droite (32) et une portion en forme de S (34), la portion en forme de S (34) coopère avec la portion de réception (30) de l'insert (14), et dans lequel les vibrations induites sur l'aiguille (18) par l'énergie ultrasonique à travers l'insert fileté (14) sont amplifiées en raison de la vibration libre au niveau de la pointe (48) de l'aiguille (18), moyennant quoi un fluide est pompé ou forcé à travers le passage (36) de l'aiguille (18) vers le canal radiculaire.

2. Ensemble de pointe (10) selon la revendication 1, dans lequel l'aiguille (18) est sensiblement rigide et a une pointe émoussée prévue au niveau de l'extrémité distale de l'aiguille.

3. Ensemble de pointe (10) selon la revendication 1, dans lequel l'aiguille (18) a une butée à proximité de l'extrémité distale de l'aiguille, la butée empêche une pointe de l'aiguille (18) de pénétrer dans un sommet du canal radiculaire de la dent.

4. Ensemble de pointe (10) selon la revendication 1, dans lequel le logement (42) a une saillie de réception de tube à proximité de l'extrémité proximale de l'aiguille, la saillie de réception de tube ayant une cannelure s'étendant circonférentiellement qui coopère avec le tube pour maintenir le tube en position sur la saillie de réception de tube.

5. Ensemble de pointe (10) selon la revendication 1, dans lequel l'extrémité distale de l'aiguille (18) vibre à une fréquence de résonance, fournissant une énergie optimale au fluide qui est délivré vers le canal radiculaire de la dent, fournissant ainsi un nettoyage optimal.
